# EUROPÄISCHE PATENTSCHRIFT

(11) **EP 1 970 289 B1**
(45) Veröffentlichungstag und Bekanntmachung des Hinweises auf die Patenterteilung: **21.04.2010**
(21) Anmeldenummer: 08101301.3
(22) Anmeldetag: 06.02.2008
(51) Int. Cl.: B62D 5/04, G01M 13/00

(54) **Verfahren zum Betrieb einer elektrischen Servolenkvorrichtung**
Method for operating an electric power steering system
Procédé destiné au fonctionnement d'un système de direction assistée électrique

(30) Priorität: 15.03.2007 DE 102007012532
(43) Veröffentlichungstag der Anmeldung: 17.09.2008
(73) Patentinhaber: ZF-Lenksysteme GmbH, 73527 Schwäbisch Gmünd (DE)
(72) Erfinder: Fröhlich, Stefan, 73568, Zimmerbach (DE); Heilig, Arnulf, 73529, Schwäbisch Gmünd (DE); Hillenbrand, Ingo, 73529, Schwäbisch Gmünd (DE)

(56) Entgegenhaltungen:
- EP-A- 1 225 117
- WO-A-98/05544
- DE-A1- 10 014 994
- DE-A1- 10 144 076
- DE-A1- 10 301 542
- DE-A1- 10 360 582

## Beschreibung

### Technisches Gebiet

Die Erfindung betrifft ein Verfahren zum Betrieb einer elektrischen Servolenkvorrichtung gemäß dem Oberbegriff von Anspruch 1. Die Erfindung betrifft ebenfalls ein Computerprogramm und ein Computerprogrammprodukt mit Programmcodemitteln, um ein derartiges Verfahren durchzuführen. Des Weiteren betrifft die Erfindung eine elektrische Servolenkvorrichtung.

### Stand der Technik

Elektronische und/oder elektromechanische Systeme sind im Betrieb vielfach hohen Belastungen durch Kräfte, Temperaturen, Drücke oder dergleichen ausgesetzt. Eine Erfassung der Beanspruchung und/oder eine Erfassung einer Ermüdung der Bauteile ist im eingebauten Zustand und/oder im Betrieb häufig nicht möglich. Vielfach sind Bauteile selbst durch Wartungsarbeiten nur schwer zugänglich. Es ist daher bekannt, sicherheitsrelevante Bauteile, beispielsweise in Brems- und/oder Lenksystemen in einem Fahrzeug mit einer hohen Sicherheitsmarge zu dimensionieren. Derart dimensionierte Bauteile benötigen jedoch mehr Bauraum und/oder haben ein größeres Gewicht. Zudem ist die Dimensionierung mit Sicherheitsmarge in der Regel auch mit hohen Kosten verbunden.

Die DE 100 14 994 A1 betrifft eine Vorrichtung und ein Verfahren zur Speicherung und/oder Auswertung von Daten in einem Speicher in einem Fahrzeug, wobei die Daten über einen Datenbus im Fahrzeug übertragen werden, an welchen Komponenten, wie Fahrzeugsysteme, Sensoren, Aktuatoren sowie weitere Fahrzeugkomponenten angeschlossen und anschließbar sind. Der Speicher ist dabei als ein zentrales Speichermedium für die mit dem Datenbus verbundenen Komponenten ausgebildet und ebenfalls mit dem Datenbus im Fahrzeug verbunden. Die Daten werden dabei permanent in dem Speichermedium über den gesamten Nutzungszeitraum des Fahrzeugs abgespeichert. Daneben werden die Daten durch mit dem Speichermedium verbindbare Auswertemittel in bevorzugter Weise so interpretiert, dass sich ein Maß für eine Benutzung und/oder eine Abnutzung des Fahrzeugs und/oder der Komponenten ergibt.

Die in der DE 103 60 582 A1 beschriebene elektromechanische Lenkung eines Kraftfahrzeugs umfasst Mittel zum Erfassen der vom Fahrer aufgebrachten Lenkmomente, Mittel zum Erfassen der Hilfsmomente eines elektrischen Servomotors der Lenkung und/oder Mittel zum Erfassen der Lenkströme des elektrischen Servomotors. Auch kann das System Mittel zum Erfassen der Systemtemperatur der Lenkung, sowie Mittel zum Erfassen der Betriebszeit vorsehen. Eine Steuer- und Auswerteeinrichtung ermittelt in Abhängigkeit der erfassten Werte mindestens einen charakteristischen Kennwert als mindestens einen Schädigungsgrad und erzeugt bei Überschreiten mindestens eines vorgegebenen Schädigungsgrads ein Ausgabesignal oder eine Informationsausgabe.

Des Weiteren zeigt die DE 103 01 542 A1 ein Verfahren und eine Vorrichtung zur Beanspruchungsanalyse mindestens eines nicht sichtbaren Systembauteils in einem Fahrzeug, mittels mindestens einer Auswerteeinheit, wobei das Systembauteil mit mindestens einem Sensorelement ausgebildet ist, das Sensorelement eine Verformung des Systembauteils detektiert und ein Signal an die Auswerteeinheit übermittelt. Das Sensorelement ist vorzugsweise als intelligenter Werkstoff ausgebildet, welcher bei einer Verformung ein elektrisches Signal abgibt. Als sicherheitskritische, in der Regel nicht sichtbare Bauteile sind beispielsweise eine Zahnstange und/oder ein Schneckengetriebe einer elektromechanischen Lenkung genannt. Ein Versagen dieser Bauteile könne beispielsweise zu einem Blockieren der Lenkung führen.

Aus der DE 100 52 275 A1 ist eine Servolenkvorrichtung, welche als Servolenkung für ein Kraftfahrzeug ausgebildet ist, bekannt, wobei eine als Lenkrad ausgebildete Lenkhandhabe zur Verschwenkung eines lenkbaren Rades dient. Das Rad ist gelenkig in bekannter Weise mit Radlenkhebeln und pro Stange mit einem verlagerbaren Bauelement, wie etwa einer Schub- oder Zahnstange, eines Getriebes, wie etwa einem Kugelumlaufgetriebe, verbunden. Ein elektrischer Servomotor ist antriebsmäßig mit dem verlagerbaren Bauelement des Getriebes verbunden. Zur spielfreien Verbindung des elektrischen Servomotors mit dem Getriebe dient eine Riemenscheibe an der Motorwelle des Servomotors, welche mit einer eingangsseitigen Riemenscheibe an dem Getriebe über einen Zahnriemen wirkverbunden ist.

Aus der DE 10 2004 037 599 A1 ist ein Kugelschraubgetriebe für ein elektromechanisches Lenksystem eines Fahrzeugs bekannt.

Die DE 103 33 909 A1 beschreibt eine Lenkmutter für einen Kugelgewindetrieb. Außerdem ist ein derartiger Kugelgewindetrieb und eine damit ausgestattete Kraftfahrzeuglenkung, insbesondere eine Elektrolenkung beschrieben.

Wünschenswert wäre es für derartige Kugelumlaufgetriebe bzw. Kugelgewindetriebe oder deren Komponenten innerhalb elektromechanischer Lenksysteme einen Eindruck von deren Beanspruchungs- bzw. Schädigungsgrad zu erhalten.

### Offenbarung der Erfindung

Dementsprechend liegt der vorliegenden Erfindung die Aufgabe zugrunde, unter dem Gesichtspunkt der Aufrechterhaltung einer hohen Sicherheit, eine geeignete Überwachung der Abnutzung bzw. des Verschleißes wenigstens eines Teils eines Kugelumlaufgetriebes einer elektrischen bzw. elektronischen Servolenkvorrichtung bereitzustellen.

Diese Aufgabe wird erfindungsgemäß durch die in Anspruch 1 genannten Merkmale gelöst.

Dadurch, dass ein Abnutzungsgrad wenigstens eines Teils des Kugelumlaufgetriebes wenigstens aus einer die Position der Zahnstange der elektrischen Servolenkvorrichtung charakterisierenden Größe und einer das Motormoment des Elektromotors charakterisierenden Größe während des Betriebs laufend ermittelt wird, kann in vorteilhafter Weise stets ein zuverlässiger charakteristischer Kennwert für einen Beanspruchungs- bzw. Schädigungsgrad des Kugelumlaufgetriebes bzw. des wenigstens einen Teils des Kugelumlaufgetriebes angegeben werden. Somit erfolgt eine Analyse bezüglich des Zustands des Kugelumlaufgetriebes hinsichtlich Verschleiß, Intensität der Nutzung und Belastung.

Sehr vorteilhaft ist es, wenn der während des Betriebs laufend ermittelte Abnutzungsgrad wenigstens des Teils des Kugelumlaufgetriebes aus aktuellen Beanspruchungswerten aufsummiert und/oder aufintegriert wird.

Dadurch ist es möglich zu signalisieren, wenn das Lebensdauerende des Kugelumlaufgetriebes bzw. des Kugelgewindetriebs oder dessen Teile wenigstens annähernd erreicht wurde.

In einer ebenfalls sehr vorteilhaften Ausgestaltung der Erfindung kann der Abnutzungsgrad wenigstens des Teils des Kugelumlaufgetriebes aus einer den zurückgelegten Weg der Zahnstange der elektrischen Servolenkvorrichtung charakterisierenden Größe ermittelt werden.

Als die Position der Zahnstange der elektrischen Servolenkvorrichtung charakterisierende Größe kann der Lenkwinkel bzw. ein Rotorwinkel des Elektromotors verwendet werden.

Alternativ oder zusätzlich kann die die Position der Zahnstange der elektrischen Servolenkvorrichtung charakterisierende Größe auch mittels eines Zahnstangenpositionssensors erfasst werden.

Erfindungsgemäß kann vorgesehen sein, dass anhand der die Position oder den zurückgelegten Weg der Zahnstange der elektrischen Servolenkvorrichtung charakterisierenden Größe ein Betrag der Lenkwinkeländerung ermittelt wird.

Als die das Motormoment des Elektromotors charakterisierende Größe kann ein Betrag eines insbesondere aktuellen bzw. momentanen Motorsollmoments oder ein Betrag eines insbesondere aktuell wirkenden Motormoments des Elektromotors verwendet werden.

Vorteilhaft ist es, wenn der Betrag des Motorsollmoments oder der Betrag des wirkenden Motormoments des Elektromotors, insbesondere durch eine Multiplikation mit einem von dem insbesondere aktuellen Lenkwinkel abhängigen Abnutzungsfaktor, gewichtet wird.

Durch die Gewichtung des Motormoments mit einem lenkwinkelabhängigen Schädigungsfaktor kann der momentane Beanspruchungswert bzw. Abnutzungsgrad wesentlich präziser bzw. realistischer bestimmt werden.

Der ermittelte aufzuintegrierende oder aufzusummierende aktuelle Beanspruchungswert kann sich aus einem Produkt des Betrags der Lenkwinkeländerung und des mit drei potenzierten Betrags des gewichteten Motorsollmoments ergeben.

Der während des Betriebs laufend ermittelte aufsummierte und/oder aufintegrierte Abnutzungsgrad wenigstens des Teils des Kugelumlaufgetriebes kann, insbesondere in einem nicht flüchtigen Speicher (z. B. einem EEPROM oder dergleichen) eines Steuergeräts der elektrischen Servolenkvorrichtung, insbesondere über den gesamten Nutzungszeitraum des Kraftfahrzeugs, abgespeichert werden.

Vorteilhaft ist es, wenn bei Überschreiten eines vorgegebenen Grenzwerts durch den aufsummierten und/oder aufintegrierten Abnutzungsgrad wenigstens des Teils des Kugelumlaufgetriebes, ein Signal ausgegeben und/oder ein Eintrag in einem Fehlerspeicher der elektrischen Servolenkvorrichtung oder des Kraftfahrzeugs abgespeichert wird.

Dadurch kann dem Fahrer bzw. der Werkstatt angezeigt werden, wenn der Abnutzungsgrad einen kritischen Wert erreicht hat und eine Überprüfung, eine Wartung oder gegebenenfalls ein Austausch wenigstens eines Teils des Kugelumlaufgetriebes notwendig ist. Der aufsummierte und/oder aufintegrierte Abnutzungsgrad wenigstens eines Teils des Kugelumlaufgetriebes kann auch zur Diagnose auslesbar sein.

Das erfindungsgemäße Verfahren zum Betrieb einer elektrischen Servolenkvorrichtung eines Kraftfahrzeugs ist vorzugsweise als Computerprogramm auf einem Steuergerät der elektrischen Servolenkvorrichtung realisiert. Dazu ist das Computerprogramm in einem Speicherelement des Steuergeräts gespeichert. Durch Abarbeitung auf einem Mikroprozessor des Steuergeräts wird das Verfahren ausgeführt. Das Computerprogramm kann auf einem computerlesbaren Datenträger (Diskette, CD, DVD, Festplatte, USB-Memorystick oder dergleichen) oder einem Internetserver als Computerprogrammprodukt gespeichert sein und von dort aus in das Speicherelement des Steuergeräts übertragen werden. Ein derartiges Computerprogramm bzw. Computerprogrammprodukt mit Programmcodemitteln ist in Anspruch 13 bzw. Anspruch 14 angegeben.

Anspruch 15 betrifft eine elektrische Servolenkvorrichtung eines Kraftfahrzeugs.

Nachfolgend ist anhand der Zeichnung ein Ausführungsbeispiel der Erfindung prinzipmäßig beschrieben.

### Kurze Beschreibung der Zeichnungen

Es zeigt:

Fig. 1 eine vereinfachte schematische Darstellung einer erfindungsgemäßen elektrischen Servolenkvorrichtung, welche von einem erfindungsgemäßen Verfahren betrieben wird; und

Fig. 2 ein vereinfachtes Blockschaltbild, welches die Ermittlung des Abnutzungsgrads wenigstens eines Teils des Kugelumlaufgetriebes der in Fig. 1 dargestellten erfindungsgemäßen elektrischen Servolenkvorrichtung verdeutlicht.

### Ausführungsform(en) der Erfindung

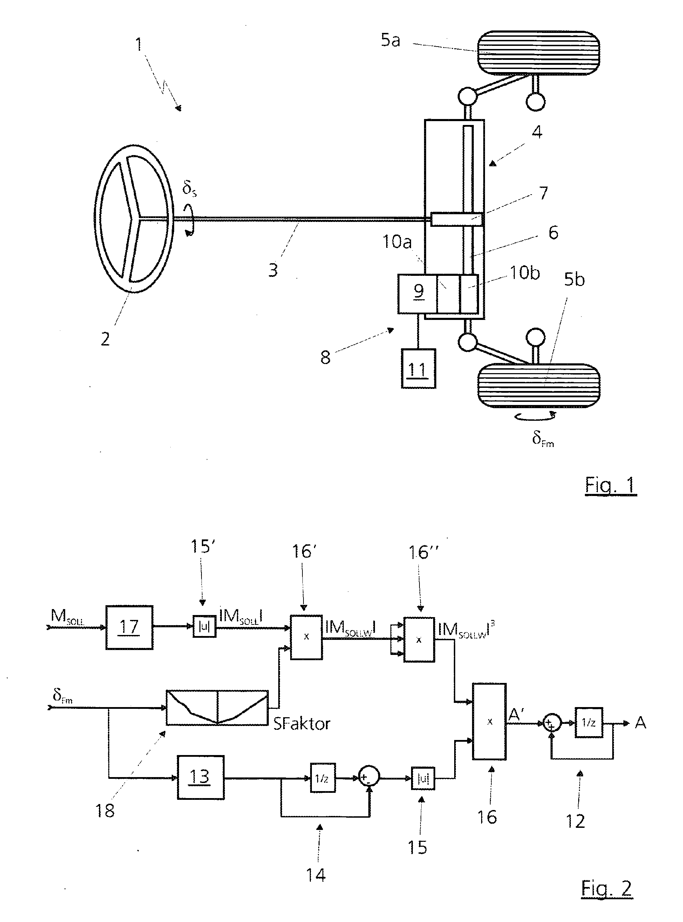

In Fig. 1 ist eine Servolenkvorrichtung 1 eines nicht dargestellten Kraftfahrzeugs vereinfacht dargestellt. Die Servolenkvorrichtung 1 weist eine als Lenkrad ausgebildete Lenkhandhabe 2 auf. Das Lenkrad 2 ist über eine Lenksäule bzw. Gelenkwelle 3 mit einem Lenkgetriebe 4 verbunden. Das Lenkgetriebe 4 dient dazu, einen Lenkradwinkel δ_{S} bzw. einen Drehwinkel der Gelenkwelle 3 in einen Radlenkwinkel bzw. Lenkwinkel δ_{Fm} von lenkbaren Rädern 5a, 5b des Kraftfahrzeugs umzusetzen. Das Lenkgetriebe 4 weist dazu eine Zahnstange 6 und ein Ritzel 7 auf, an welches die Gelenkwelle 3 angreift.

Darüber hinaus weist die Servolenkvorrichtung 1 einen elektrischen Servoantrieb 8 auf, welcher insbesondere der variablen Momentenunterstützung dient. Der elektrische Servoantrieb 8 weist einen Elektromotor 9 zur Realisierung der Momentenunterstützung über ein Riemengetriebe 10a auf. Das Riemengetriebe 10a weist ein Antriebsritzel und eine Riemenscheibe zur Übertragung der Momentenunterstützung über einen Kugelgewindetrieb bzw. ein Kugelumlaufgetriebe 10b auf die Zahnstange 6 der Servolenkvorrichtung 1 auf. Des Weiteren ist ein elektronisches Steuergerät 11 zur Ansteuerung und Regelung des Elektromotors 9 vorgesehen. Das erfindungsgemäße Verfahren zum Betrieb der elektrischen Servolenkvorrichtung 1 ist als Computerprogramm auf dem Steuergerät 11 realisiert, wobei auch andere Lösungen selbstverständlich in Frage kommen. Dazu ist das Computerprogramm in einem Speicherelement des Steuergeräts 11 gespeichert. Durch Abarbeitung auf einem Mikroprozessor des Steuergeräts 11 wird das Verfahren ausgeführt. Das Computerprogramm kann auf einem nicht dargestellten computerlesbaren Datenträger (Diskette, CD, DVD, Festplatte, USB-Memorystick oder dergleichen) oder einem Internetserver als Computerprogrammprodukt gespeichert sein und von dort aus in das Speicherelement des Steuergeräts 11 übertragen werden.

Fig. 2 verdeutlicht die Ermittlung eines als Schädigungsintegral in einem Integrator 12 aufintegrierten Abnutzungsgrads A des Kugelumlaufgetriebes 10b bzw. wenigstens eines Teils des Kugelumlaufgetriebes 10b der erfindungsgemäßen elektrischen Servolenkvorrichtung 1 im Rahmen des erfindungsgemäßen Verfahrens zum Betrieb der elektrischen Servolenkvorrichtung 1. In weiteren nicht dargestellten Ausführungsbeispielen könnte der Abnutzungsgrad A auch aufsummiert werden. Der Abnutzungsgrad A des Kugelumlaufgetriebes 10b wird aus einer die Position der Zahnstange 6 der elektrischen Servolenkvorrichtung 1 charakterisierenden Größe bzw. aus einer den zurückgelegten Weg der Zahnstange 6 der elektrischen Servolenkvorrichtung 1 charakterisierenden Größe und einer das Motormoment des Elektromotors 9 charakterisierenden Größe während des Betriebs laufend ermittelt.

Als die Position bzw. den zurückgelegten Weg der Zahnstange 6 der elektrischen Servolenkvorrichtung 1 charakterisierende Größe wird der Lenkwinkel δ_{Fm} verwendet. Dieser wird vorzugsweise aus einem Rotorwinkel des Elektromotors 9 berechnet. D. h. grundsätzlich kann auch der Rotorwinkel des Elektromotors 9 als die Position bzw. den zurückgelegten Weg der Zahnstange 6 der elektrischen Servolenkvorrichtung 1 charakterisierende Größe eingesetzt werden. In weiteren nicht dargestellten Ausführungsbeispielen könnte die die Position der Zahnstange 6 der elektrischen Servolenkvorrichtung 1 charakterisierende Größe auch mittels eines Zahnstangenpositionssensors erfasst werden. Das Steuergerät 11 erhält den Lenkwinkel δ_{Fm}, den Rotorwinkel des Elektromotors 9 und weitere Größen von nicht dargestellten Sensoren und/oder anderen Fahrzeugsystemen als Eingangssignale bzw. berechnet diese.

Wie aus Fig. 2 ersichtlich wird anhand des Lenkwinkels δ_{Fm} ein Betrag der Lenkwinkeländerung ermittelt. Dazu wird der Lenkwinkel δ_{Fm} zuerst durch einen Hysteresefilter 13 (welcher beispielsweise 1° Hysterese aufweist) geleitet, um Mikrobewegungen bzw. zu vernachlässigende Mikroveränderungen des Lenkwinkels δ_{Fm} zu entfernen bzw. zu filtern. Anschließend ermitteln Einheiten 14 und 15 einen Betrag der Lenkwinkeländerung, wobei die Einheit 14 vorzugsweise eine Verzögerung von 10 ms ausführt. Der Betrag der Lenkwinkeländerung wird einem ersten Eingang eines Multiplizierglieds 16 zugeführt. Der Ausgang des Multiplizierglieds 16, welcher dem neuen, d. h. aufzuintegrierenden Beanspruchungswert A' entspricht, wird auf den Eingang des Integrators 12 geleitet.

Als die das Motormoment des Elektromotors 9 charakterisierende Größe wird ein Motorsollmoment M_{SOLL} bzw. dessen Betrag |M_{SOLL}| verwendet. In weiteren nicht dargestellten Ausführungsbeispielen könnte auch ein Betrag eines aktuell wirkenden Motormoments des Elektromotors 9 verwendet werden. Wie aus Fig. 2 weiter ersichtlich erhält ein Filterglied 17, welches vorzugsweise als PT1-Filter mit 200 ms Zeitkonstante ausgebildet ist, das Motorsollmoment M_{SOLL} als Eingangssignal und gibt als Ausgangssignal das gefilterte Motorsollmoment M_{SOLL} an eine Einheit 15', welche den Betrag des gefilterten Motorsollmoments |M_{SOLL}| bildet. Der Betrag des Motorsollmoments |M_{SOLL}| wird an einen ersten Eingang eines Multiplizierglieds 16' übergeben und durch eine Multiplikation mit einem von dem aktuellen Lenkwinkel δ_{Fm} abhängigen Abnutzungs- bzw. Schädigungsfaktor SFaktor, gewichtet. Dazu wird der Schädigungsfaktor SFaktor in einem Kennfeld 18 anhand des aktuellen Lenkwinkels δ_{Fm} ermittelt und an einen zweiten Eingang des Multiplizierglieds 16' übergeben. Der Schädigungsfaktor SFaktor kann vorzugsweise Werte zwischen 0,8 und 1,0 annehmen. Das Multiplizierglied 16' ermittelt das Produkt, d. h. einen gewichteten Betrag des Motorsollmoments |M_{SOLLW}| aus dem Schädigungsfaktor SFaktor und dem Betrag des Motorsollmoments |M_{SOLL}| und übergibt dieses an ein weiteres Multiplizierglied 16", welches den gewichteten Betrag des Motorsollmoments |M_{SOLLW}| hoch drei nimmt bzw. mit drei potenziert und als Ausgangssignal |M_{SOLLW}|³ liefert. Dieses Ausgangssignal wird dann an das Multiplizierglied 16 als zweites Eingangssignal geliefert. Der ermittelte aufzuintegrierende oder aufzusummierende Beanspruchungswert A' ergibt sich somit aus einem Produkt des Betrags der Lenkwinkeländerung und des mit drei potenzierten Betrags des gewichteten Motorsollmoments |M_{SOLLW}|³. Der während des Betriebs laufend ermittelte aufintegrierte Abnutzungsgrad A des Kugelumlaufgetriebes 10b wird in einem nicht flüchtigen Speicher eines Steuergeräts 11 der elektrischen Servolenkvorrichtung 1, vorzugsweise einem EEPROM abgespeichert.

Wenn der aufintegrierte Abnutzungsgrad A des Kugelumlaufgetriebes 10b einen vorgegebenen Grenzwert überschreitet, wird ein Signal ausgegeben und ein Eintrag in einem Fehlerspeicher der elektrischen Servolenkvorrichtung 1 abgespeichert. Der aufintegrierte Abnutzungsgrad A des Kugelumlaufgetriebes 10b ist zur Diagnose auslesbar.

### Bezugszeichen

- 1: Überlagerungslenksystem
- 2: Lenkrad
- 3: Gelenkwelle / Lenksäule
- 4: Lenkgetriebe
- 5a,5b: lenkbare Räder
- 6: Zahnstange
- 7: Ritzel
- 8: elektrischer Servoantrieb
- 9: Elektromotor
- 10: Riemengetriebe
- 11: elektronisches Steuergerät
- 12: Integrator
- 13: Hysteresefilter
- 14: Einheit
- 15,15': betragsbildende Einheiten
- 16,16',16": Multiplizierglieder
- 17: Filterglied
- A: Abnutzungsgrad
- A': Beanspruchungswert
- M_{SOLL}: Motorsollmoment des Elektromotors
- M_{SOLLW}: gewichtetes Motorsollmoment des Elektromotors
- SFaktor: lenkwinkelabhängiger Schädigungsfaktor
- δ_{Fm}: Radlenkwinkel bzw. Lenkwinkel
- δ_{S}: Lenkradwinkel

## Patentansprüche

1. Verfahren zum Betrieb einer elektrischen Servolenkvorrichtung (1) eines Kraftfahrzeugs, mit:
- einer Lenkhandhabe (2) zur Vorgabe eines Lenkradwinkels (δ_{S}) als Maß für einen gewünschten Lenkwinkel (Ö_{Fm}) für wenigstens ein lenkbares Rad (5a,5b) des Kraftfahrzeugs; und
- einem elektrischen Servoantrieb (8) mit einem Elektromotor (9) zur Realisierung der Lenkunterstützung über ein Kugelumlaufgetriebe (10b),
**dadurch gekennzeichnet, dass** ein Abnutzungsgrad (A) wenigstens eines Teils des Kugelumlaufgetriebes (10b) wenigstens aus einer die Position der Zahnstange (6) der elektrischen Servolenkvorrichtung (1) charakterisierenden Größe und einer das Motormoment des Elektromotors (9) charakterisierenden Größe während des Betriebs laufend ermittelt wird, und
- der während des Betriebs laufend ermittelte Abnutzungsgrad (A) wenigstens des Teils des Kugelumlaufgetriebes (10b) aus aktuellen Beanspruchungswerten (A') aufsummiert und/oder aufintegriert wird.

2. Verfahren nach Anspruch 1, **dadurch gekennzeichnet, dass** der Abnutzungsgrad (A) wenigstens des Teils des Kugelumlaufgetriebes (10b) aus einer den zurückgelegten Weg der Zahnstange (6) der elektrischen Servolenkvorrichtung (1) charakterisierenden Größe ermittelt wird.

3. Verfahren nach Anspruch 1 oder 2, **dadurch gekennzeichnet, dass** als die Position der Zahnstange (6) der elektrischen Servolenkvorrichtung (1) charakterisierende Größe der Lenkwinkel (δ_{Fm}) oder ein Rotorwinkel des Elektromotors (9) verwendet wird.

4. Verfahren nach Anspruch 1 oder 2, **dadurch gekennzeichnet, dass** die die Position der Zahnstange (6) der elektrischen Servolenkvorrichtung (1) charakterisierende Größe mittels eines Zahnstangenpositionssensors erfasst wird.

5. Verfahren nach einem der Ansprüche 2 bis 4, **dadurch gekennzeichnet, dass** anhand der die Position oder den zurückgelegten Weg der Zahnstange (6) der elektrischen Servolenkvorrichtung (1) charakterisierenden Größe ein Betrag der Lenkwinkeländerung ermittelt wird.

6. Verfahren nach einem der Ansprüche 1 bis 5, **dadurch gekennzeichnet, dass** als die das Motormoment des Elektromotors (9) charakterisierende Größe ein Betrag eines Motorsollmoments (|M_{SOLL}|) oder ein Betrag eines wirkenden Motormoments des Elektromotors (9) verwendet wird.

7. Verfahren nach Anspruch 6, **dadurch gekennzeichnet, dass** der Betrag des Motorsollmoments (|M_{SOLL}|) oder der Betrag des wirkenden Motormoments des Elektromotors (9), insbesondere durch eine Multiplikation mit einem von dem Lenkwinkel (δ_{Fm}) abhängigen Schädigungsfaktor (SFaktor), gewichtet wird.

8. Verfahren nach Anspruch 6 oder 7, **dadurch gekennzeichnet, dass** sich der ermittelte aufzuintegrierende oder aufzusummierende aktuelle Beanspruchungswert (A') aus einem Produkt des Betrags der Lenkwinkeländerung und des mit drei potenzierten Betrags des gewichteten Motorsollmoments (|M_{SOLLW}|³) ergibt.

9. Verfahren nach einem der Ansprüche 1 bis 8, **dadurch gekennzeichnet, dass** der während des Betriebs laufend ermittelte aufsummierte und/oder aufintegrierte Abnutzungsgrad wenigstens des Teils des Kugelumlaufgetriebes (10b), insbesondere in einem nicht flüchtigen Speicher eines Steuergeräts (11) der elektrischen Servolenkvorrichtung (1), abgespeichert wird.

10. Verfahren nach einem der Ansprüche 1 bis 9, **dadurch gekennzeichnet, dass** bei Überschreiten eines vorgegebenen Grenzwerts durch den aufsummierten und/oder aufintegrierten Abnutzungsgrad wenigstens des Teils des Kugelumlaufgetriebes (10b), ein Signal ausgegeben und/oder ein Eintrag in einem Fehlerspeicher der elektrischen Servolenkvorrichtung (1) oder des Kraftfahrzeugs abgespeichert wird.

11. Verfahren nach einem der Ansprüche 1 bis 10, **dadurch gekennzeichnet, dass** der aufsummierte und/oder aufintegrierte Abnutzungsgrad wenigstens des Teils des Kugelumlaufgetriebes (10b) zur Diagnose auslesbar ist.

12. Computerprogramm mit Programmcodemitteln, um ein Verfahren gemäß einem der Ansprüche 1 bis 11 durchzuführen, wenn dass Programm auf einem Mikroprozessor eines Computers, insbesondere auf einem Steuergerät (11) einer elektrischen Servolenkvorrichtung (1) eines Kraftfahrzeugs, ausgeführt wird.

13. Computerprogrammprodukt mit Programmcodemitteln, die auf einem computerlesbaren Datenträger gespeichert sind, um ein Verfahren gemäß einem der Ansprüche 1 bis 11 durchzuführen, wenn dass Programm auf einem Mikroprozessor eines Computers, insbesondere auf einem Steuergerät (11) einer elektrischen Servolenkvorrichtung (1) eines Kraftfahrzeugs, ausgeführt wird.

14. Elektrische Servolenkvorrichtung (1) eines Kraftfahrzeugs, mit:
- einer Lenkhandhabe (2) zur Vorgabe eines Lenkradwinkels (δ_{S}) als Maß für einen gewünschten Lenkwinkel (δ_{Fm}) für wenigstens ein lenkbares Rad (5a,5b) des Kraftfahrzeugs,
- einem elektrischen Servoantrieb (8) mit einem Elektromotor (9) zur Realisierung der Lenkunterstützung über ein Kugelumlaufgetriebe (10b), und
- einem elektronischen Steuergerät (11) zur Ansteuerung und Regelung des Elektromotors (9),
**dadurch gekennzeichnet, dass** das elektronische Steuergerät (11) zur Ausführung eines Computerprogramms gemäß Anspruch 12 eingerichtet ist.

## Claims

1. Method for operating an electrical power steering apparatus (1) of a motor vehicle, having:
- a steering handle (2) for prespecifying a steering wheel angle (δ_{S}) as a measure of a desired steering angle (δ_{Fm}) for at least one steerable wheel (5a, 5b) of the motor vehicle; and
- an electrical servo drive (8) with an electric motor (9) for implementing steering assistance by means of a recirculating ball mechanism (10b),
**characterized in that** a degree (A) of wear of at least one part of the recirculating ball mechanism (10b) is continuously determined during operation at least from a variable which characterizes the position of the toothed rack (6) of the electrical power steering apparatus (1) and a variable which characterizes the motor torque of the electric motor (9), and
- the degree (A) of wear, which is continuously determined during operation, of at least the part of the recirculating ball mechanism (10b) is added up and/or integrated from actual loading values (A').

2. Method according to Claim 1, **characterized in that** the degree (A) of wear of at least the part of the recirculating ball mechanism (10b) is determined from a variable which characterizes the distance covered by the toothed rack (6) of the electrical power steering apparatus (1).

3. Method according to Claim 1 or 2, **characterized in that** the steering angle (δ_{Fm}) or a rotor angle of the electric motor (9) is used as the variable which characterizes the position of the toothed rack (6) of the electrical power steering apparatus (1).

4. Method according to Claim 1 or 2, **characterized in that** the variable which characterizes the position of the toothed rack (6) of the electrical power steering apparatus (1) is detected by means of a toothed rack position sensor.

5. Method according to one of Claims 2 to 4, **characterized in that** a value for the change in steering angle is determined on the basis of the variable which characterizes the position of or the distance covered by the toothed rack (6) of the electrical power steering apparatus (1).

6. Method according to one of Claims 1 to 5, **characterized in that** a value for the setpoint motor torque ( |Mₛₑₜₚₒᵢₙₜ| ) or a value for an active motor torque of the electric motor (9) is used as the variable which characterizes the motor torque of the electric motor (9).

7. Method according to Claim 6, **characterized in that** the value of the setpoint motor torque ( |Mₛₑₜₚₒᵢₙₜ | ) or the value of the active motor torque of the electric motor (9) is weighted, in particular by multiplication with a damage factor (S factor) which is dependent on the steering angle (δ_{Fm}).

8. Method according to Claim 6 or 7, **characterized in that** the determined actual loading value (A') to be integrated or added up is given by a product of the value for the change in steering angle and the value for the weighted setpoint motor torque to the power of three ( | Msetpointvalue | ³).

9. Method according to one of Claims 1 to 8, **characterized in that** the added-up and/or integrated degree of wear, which is determined continuously during operation, of at least the part of the recirculating ball mechanism (10b) is stored, in particular, in a non-volatile memory of a controller (11) of the electrical power steering apparatus (1).

10. Method according to one of Claims 1 to 9, **characterized in that**, when a predefined limit value is exceeded by the added-up and/or integrated degree of wear of at least the part of the recirculating ball mechanism (10b), a signal is output and/or an entry is stored in a fault memory of the electrical power steering apparatus (1) or of the motor vehicle.

11. Method according to one of Claims 1 to 10, **characterized in that** the added-up and/or integrated degree of wear of at least the part of the recirculating ball mechanism (10b) can be read out for diagnostic purposes.

12. Computer program with program code means in order to carry out a method according to one of Claims 1 to 11 when the program is run on a microprocessor of a computer, in particular on a controller (11) of an electrical power steering apparatus (1) of a motor vehicle.

13. Computer program product with program code means which are stored in a computer-readable data storage medium in order to carry out a method according to one of Claims 1 to 11 when the program is run on a microprocessor of a computer, in particular on a controller (11) of an electrical power steering apparatus (1) of a motor vehicle.

14. Electrical power steering apparatus (1) of a motor vehicle, having:
- a steering handle (2) for prespecifying a steering wheel angle (δ_{S}) as a measure of a desired steering angle (δ_{Fm}) for at least one steerable wheel (5a, 5b) of the motor vehicle;
- an electrical servo drive (8) with an electric motor (9) for implementing steering assistance by means of a recirculating ball mechanism (10b), and
- an electronic controller (11) for actuating and regulating the electric motor (9),
**characterized in that** the electronic controller (11) is designed to run a computer program according to Claim 12.

## Revendications

1. Procédé de fonctionnement d'un dispositif de direction assistée électrique (1) d'un véhicule automobile comprenant :
- une manette de commande de direction (2) pour prédéfinir un angle de volant (δs) comme cote d'un angle de direction (δFm) souhaité pour au moins une roue orientable (5a, 5b) du véhicule automobile ; et
- un servomoteur électrique (8) comprenant un moteur électrique (9) pour réaliser l'assistance à la direction par le biais d'un engrenage à recirculation de billes (10b),
**caractérisé en ce qu'**un degré d'usure (A) d'au moins une partie de l'engrenage à recirculation de billes (10b) est déterminé continuellement pendant le fonctionnement au moins à partir d'une grandeur qui caractérise la position de la crémaillère (6) du dispositif de direction assistée électrique (1) et d'une grandeur qui caractérise le couple moteur du moteur électrique (9), et
- le degré d'usure (A) de l'au moins une partie de l'engrenage à recirculation de billes (10b) qui est déterminé continuellement pendant le fonctionnement est totalisé et/ou intégré à partir de valeurs de charge (A') actuelles.

2. Procédé selon la revendication 1, **caractérisé en ce que** le degré d'usure (A) de l'au moins une partie de l'engrenage à recirculation de billes (10b) est déterminé à partir d'une grandeur qui caractérise la course parcourue par la crémaillère (6) du dispositif de direction assistée électrique (1).

3. Procédé selon la revendication 1 ou 2, **caractérisé en ce que** la grandeur utilisée pour caractériser la position de la crémaillère (6) du dispositif de direction assistée électrique (1) est l'angle de direction (δFm) ou un angle de rotor du moteur électrique (9).

4. Procédé selon la revendication 1 ou 2, **caractérisé en ce que** la grandeur qui caractérise la position de la crémaillère (6) du dispositif de direction assistée électrique (1) est acquise au moyen d'un détecteur de position de crémaillère.

5. Procédé selon l'une des revendications 2 à 4, **caractérisé en ce qu'**une valeur absolue de modification de l'angle de direction est déterminée à l'aide de la grandeur qui caractérise la position de la crémaillère (6) du dispositif de direction assistée électrique (1) ou la course parcourue par celle-ci.

6. Procédé selon l'une des revendications 1 à 5, **caractérisé en ce que** la grandeur utilisée pour caractériser le couple moteur du moteur électrique (9) est une valeur absolue du couple moteur de consigne (|M_{Cons}|) ou une valeur absolue d'un couple moteur appliqué par le moteur électrique (9).

7. Procédé selon la revendication 6, **caractérisé en ce que** la valeur absolue du couple moteur de consigne (|M_{Cons}|) ou la valeur absolue d'un couple moteur appliqué par le moteur électrique (9) est pondérée, notamment par une multiplication avec un facteur de détérioration (SFacteur) qui dépend de l'angle de direction (δFm).

8. Procédé selon la revendication 6 ou 7, **caractérisé en ce que** la valeur de charge (A') actuelle déterminée à intégrer ou à totaliser résulte d'un produit de la valeur absolue de la variation de l'angle de direction par le cube de la valeur absolue du couple moteur de consigne (|M_{Cons}|) ³ pondéré.

9. Procédé selon l'une des revendications 1 à 8, **caractérisé en ce que** le degré d'usure de l'au moins une partie de l'engrenage à recirculation de billes (10b) totalisé et/ou intégré déterminé continuellement pendant le fonctionnement est enregistré, notamment dans une mémoire non volatile d'un module de commande (11) du dispositif de direction assistée électrique (1).

10. Procédé selon l'une des revendications 1 à 9, **caractérisé en ce que** si le degré d'usure de l'au moins une partie de l'engrenage à recirculation de billes (10b) totalisé et/ou intégré dépasse une valeur limite prédéfinie, un signal est délivré et/ou un enregistrement est effectué dans une mémoire de défauts du dispositif de direction assistée électrique (1) ou du véhicule automobile.

11. Procédé selon l'une des revendications 1 à 10, **caractérisé en ce que** le degré d'usure de l'au moins une partie de l'engrenage à recirculation de billes (10b) totalisé et/ou intégré peut être lu à des fins de diagnostic.

12. Programme informatique comprenant des moyens de code de programme pour mettre en oeuvre un procédé selon l'une des revendications 1 à 11 lorsque le programme est exécuté sur un microprocesseur d'un ordinateur, notamment sur un module de commande (11) d'un dispositif de direction assistée électrique (1) d'un véhicule automobile.

13. Produit de programme informatique comprenant des moyens de code de programme qui sont enregistrés sur un support de données lisible par un ordinateur afin de mettre en oeuvre un procédé selon l'une des revendications 1 à 11 lorsque le programme est exécuté sur un microprocesseur d'un ordinateur, notamment sur un module de commande (11) d'un dispositif de direction assistée électrique (1) d'un véhicule automobile.

14. Dispositif de direction assistée électrique (1) d'un véhicule automobile comprenant :
- une manette de commande de direction (2) pour prédéfinir un angle de volant (δs) comme cote d'un angle de direction (δFm) souhaité pour au moins une roue orientable (5a, 5b) du véhicule automobile,
- un servomoteur électrique (8) comprenant un moteur électrique (9) pour réaliser l'assistance à la direction par le biais d'un engrenage à recirculation de billes (10b), et
- un module de commande électronique (11) pour commander et réguler le moteur électrique (9),
**caractérisé en ce que** le module de commande électronique (11) est conçu pour exécuter un programme informatique selon la revendication 12.
